# EUROPEAN PATENT APPLICATION

(11) **EP 4 670 581 A1**
(43) Date of publication of application: **31.12.2025**
(21) Application number: 25185011.1
(22) Date of filing: 24.06.2025
(51) Int. Cl.: A47J 31/40, A47J 31/42

(54) **BEVERAGE MACHINE**

(30) Priority: 30.06.2024 CN 202410866234
(71) Applicant: Kalerm Technology (Suzhou) Co., Ltd, Suzhou Jiangsu 215134 (CN)
(72) Inventor: MAO,, Lei, Suzhou 215134 (CN); QIU, Libing, Suzhou 215134 (CN); DU, Dongdong, Suzhou 215134 (CN)
(74) Representative: Murgitroyd & Company

(57) **Abstract**

A beverage machine includes a housing, and a feeding assembly disposed inside the housing. An outer wall surface of a first sidewall of the housing is provided with a mounting portion; and the beverage machine further includes a weighing module mounted on the mounting portion. The weighing module includes a case having a mounting space, a weighing sensor disposed within the mounting space, and a support member that cooperates with the weighing sensor and is configured to support a powder ingredient supplied by the feeding assembly, and the weighing sensor is configured to detect a weight of the powder ingredient, so that powder residue inside the housing can be prevented from depositing on the weighing sensor, which not only improves measurement accuracy of the weighing module, but also facilitates assembly between the weighing module and the housing, allows for easy removal of the weighing module for maintenance and repair.

## Description

### TECHNICAL FIELD

The present invention relates to the field of beverage machines, and in particular, to a beverage machine.

### BACKGROUND

Beverage machines for making beverages have gradually become popular in thousands of households. A ratio of various powder ingredients during a beverage preparation process is a key factor that affects a final taste of a beverage. For instance, as for coffee machines, a mixture ratio of coffee powder to water affects a taste of final extracted coffee.

Currently, the amount of power ingredient dispensed is generally controlled by coffee machines on the market in the following two ways. First, the amount of power ingredient dispensed is precisely controlled by controlling operating time of a grinding motor. However, it has been proven that different grinding levels and different types of coffee beans result in varying amounts of power ingredient dispensed within the same time period, and therefore, relying solely on controlling the operating time of the grinding motor cannot achieve precise control over the amount of power ingredient dispensed, leading to an inconsistent extraction taste, which affects user experience. Second, a weighing sensor is integrated into a coffee machine, the weighing sensor is generally disposed inside a housing of the coffee machine and is connected to a support bracket that supports a powder container (such as a portafilter), and the amount of power ingredient dispensed can be accurately controlled by utilizing the weighing sensor, thereby greatly improving consistency of a coffee extraction taste. However, on one hand, powder residue and other residues inside the coffee machine tend to accumulate on the weighing sensor, leading to a decrease in measurement accuracy of the weighing sensor, which affects the coffee extraction taste; and on the other hand, when the weighing sensor malfunctions or other issues arise, the entire machine needs to be disassembled for repair, which is relatively cumbersome.

### SUMMARY

The present invention aims to provide a beverage machine.

In order to achieve the above purposes, the present invention adopts the following technical solutions. A beverage machine includes a housing, a feeding assembly disposed inside the housing, and a control unit, and the housing includes a first sidewall; an outer wall surface of the first sidewall is provided with a mounting portion; and the beverage machine further includes a weighing module mounted on the mounting portion and communicatively connected to the control unit, the weighing module includes a case having a mounting space, a weighing sensor disposed within the mounting space, and a support member that cooperates with the weighing sensor, the support member is configured to hold a powder ingredient supplied by the feeding assembly directly or indirectly, and the weighing sensor is configured to detect a weight of the powder ingredient.

In the beverage machine in the technical solutions of the present invention, the weighing sensor is modularized into the weighing module, and the weighing module is mounted outside the housing, and a space defined by the weighing module is isolated from an internal space of the housing, so that powder residue inside the housing can be prevented from depositing on the weighing sensor, which not only improves measurement accuracy of the weighing module, but also facilitates assembly between the weighing module and the housing, and allows for easy removal of the weighing module for maintenance and repair.

As a further improved technical solution of the present invention, the weighing module is detachably connected to the mounting portion.

As a further improved technical solution of the present invention, the mounting portion is a groove recessed from an outer wall surface of the first sidewall toward an internal space of the housing, and the weighing module is partially mounted within the groove.

The mounting portion is configured as the groove recessed from the outer wall surface of the first sidewall. On one hand, the case is partially accommodated within the groove, that is, at least a part of the case is accommodated within the groove, thereby improving overall appearance effect of the beverage machine; and on the other hand, a distance between a discharge end and a periphery of an opening of a powder container can be increased, so as to avoid the powder ingredient discharged through the discharge end from accumulating at the opening of the powder container, and avoid the powder ingredient discharged through the discharge end from entering a gap between the support member and the case, which could lead to powder jamming and consequently render the support member unable to move normally to drive deforming of the weighing sensor, thereby ensuring measurement accuracy of the weighing module.

As a further improved technical solution of the present invention, the case is disposed outside the housing, and the mounting space and a space defined by the housing are mutually independent and isolated.

As a further improved technical solution of the present invention, the case includes a second sidewall for fixing to the mounting portion, a third sidewall disposed opposite to the second sidewall, and a bottom wall, the bottom wall is located between a bottom end of the second sidewall and a bottom end of the third sidewall, and the weighing sensor is disposed at the bottom wall; and
the third sidewall is provided with a mounting opening, the weighing module further includes a connecting bracket disposed on the weighing sensor, an end, away from the weighing sensor, of the connecting bracket is located at the mounting opening, and the support member is disposed at the end, away from the weighing sensor, of the connecting bracket, from the mounting opening.

As a further improved technical solution of the present invention, the weighing sensor includes a detection end and a fixing end that are oppositely disposed, the fixing end is disposed at the bottom wall, and the detection end is disposed on the connecting bracket; and a first spacer is disposed between the fixing end and the bottom wall, and/or, a second spacer is disposed between the detection end and the connecting bracket.

As a further improved technical solution of the present invention, the case includes a second sidewall for fixing to the mounting portion, and a third sidewall disposed opposite to the second sidewall, and the third sidewall is provided with a mounting opening;
the support member includes a shielding plate located at a side of the mounting opening, the weighing module further includes a limiting plate located at another side of the mounting opening and operatively connected to the shielding plate, and the shielding plate is located at a side, away from the second sidewall, of the limiting plate; and
a clearance space is provided between the shielding plate and the limiting plate, and an edge of the mounting opening is located within the clearance space.

Therefore, it is possible to reserve sufficient deformation space, which does not affect a movement of the support member during a measurement process, thereby ensuring measurement accuracy of the weighing module.

As a further improved technical solution of the present invention, the support member is a support bracket for supporting a powder container, and the support bracket includes:
a mounting groove for accommodating the powder container, the mounting groove including a connecting wall and two support arms extending in a same direction from two opposite ends of the connecting wall, and the two support arms being configured to support a hanging ear of the powder container; and
at least one limiting protrusion protruding from the connecting wall, and the at least one limiting protrusion being located above the two support arms, to restrict a movement of the powder container in a height direction.

Both the support arms and the limiting protrusion are provided, so that the powder container can be more stably accommodated within the mounting groove.

As a further improved technical solution of the present invention, the support member is a support bracket for supporting a powder container, the support bracket includes a mounting groove for accommodating the powder container, the mounting groove includes a connecting wall and two support arms extending in a same direction from two opposite ends of the connecting wall, the two support arms are configured to support a hanging ear of the powder container, and an inner wall surface of the connecting wall is provided with a guide rail extending in a mounting direction of the powder container; and
the weighing module further includes a sensing element and a button for triggering the sensing element, the button is slidably connected in the guide rail, and at least a part of the button protrudes from the inner wall surface.

The button is configured such that at least a part of the button protrudes from the inner wall surface. Therefore, when the powder container is mounted, alignment is not required; instead, it is only necessary to push the powder container backward such that the button is pushed by a wall surface of the powder container to trigger the sensing element, thereby simplifying an installation of the powder container.

As a further improved technical solution of the present invention, the support member is a support bracket for supporting a powder container; the support bracket includes a mounting groove for accommodating the powder container, the mounting groove includes a connecting wall and two support arms extending in a same direction from two laterally opposite ends of the connecting wall, and the two support arms are configured to support a hanging ear of the powder container; and
the weighing sensor is arranged to extend in a lateral direction, and an extending direction of the weighing sensor is consistent with an arrangement direction of the two support arms.

On one hand, a space along a forward and backward direction of the weighing module can be effectively saved, resulting in a relatively compact overall structure of the weighing module; and on the other hand, a distance between the weighing sensor and a grinding mechanism in the beverage machine can be increased, thereby reducing weighing inaccuracy caused by a vibration from the grinding mechanism.

As a further improved technical solution of the present invention, the case includes a second sidewall for fixing to the mounting portion and a third sidewall disposed opposite to the second sidewall, the third sidewall has a receiving groove that is inwardly recessed, and a bottom of the receiving groove is provided with a mounting opening that cooperates with the support member.

As a further improved technical solution of the present invention, the support member includes a shielding plate that cooperates with the mounting opening, the shielding plate is located at a side, away from the second sidewall, of the mounting opening, and there is a preset interval between the shielding plate and a sidewall of the receiving groove; and the sidewall, on a side away from the feeding assembly along a falling direction of the powder ingredient, of the receiving groove is provided with a first guiding inclined surface.

As a further improved technical solution of the present invention, a top portion of the support member has a second guiding inclined surface sloping downward in a direction away from the first sidewall.

As a further improved technical solution of the present invention, the mounting portion is provided with a first contact electrically connected to the control unit, and the case is provided with a second contact configured to conductively connect to the first contact.

As a further improved technical solution of the present invention, the casing includes an outer shell for fixing to the mounting portion, a rear cover located between the outer shell and the first sidewall and connected to the outer shell, and a top cover located above the outer shell and connected to the outer shell; and the outer shell includes a main shell body and a protrusion extending from a side, close to the rear cover, of the main shell body toward the rear cover, and the mounting space includes a space enclosed jointly by the protrusion and the rear cover.

As a further improved technical solution of the present invention, a mounting opening is provided on a side, away from the rear cover, of the protrusion, and the weighing module further includes a connecting bracket disposed on the weighing sensor;
the support member is a support bracket for supporting the powder container, the support bracket includes a mounting groove for accommodating the powder container, the mounting groove includes a connecting wall and two support arms extending in a same direction from two laterally opposite ends of the connecting wall, and the two support arms are configured to support a hanging ear of the powder container; the support bracket further includes a support ring passing through the mounting opening for connecting to the weighing sensor, and the weighing sensor and the support ring are both located within the space enclosed jointly by the protrusion and the rear cover; and
the weighing sensor includes a fixing end and a detection end that are oppositely disposed, the fixing end is connected to the casing through the connecting bracket, and the support ring is connected to the detection end.

As a further improved technical solution of the present invention, the first sidewall is provided with a through hole; and the feeding assembly includes a grinding mechanism disposed within an internal space of the housing and a discharge pipe connected to the grinding mechanism, a discharge end of the discharge pipe extends out of the through hole, and the discharge pipe is located above the weighing module.

### BRIEF DESCRIPTION OF THE DRAWINGS

FIG. 1 is a schematic structural diagram of a beverage machine according to a specific embodiment of the present invention.
FIG. 2 is a schematic structural diagram of the beverage machine in FIG. 1 from another perspective.
FIG. 3 is a cross-sectional view of the beverage machine along an A-A direction in FIG. 2.
FIG. 4 is a cross-sectional view of an implementation of the weighing module in FIG. 3.
FIG. 5 is an exploded view of the beverage machine in FIG. 1.
FIG. 6 is a schematic structural diagram of the weighing module in FIG. 5 from another perspective.
FIG. 7 is an exploded view of the weighing module in FIG. 6.
FIG. 8 is a partial exploded view of the weighing module in FIG. 6 from another perspective.
FIG. 9 is an exploded view of the weighing module in FIG. 8.
FIG. 10 is a schematic structural diagram of the support bracket in FIG. 7 from another perspective.
FIG. 11 is a schematic structural diagram of a beverage machine according to another specific embodiment of the present invention.
FIG. 12 is a schematic structural diagram of a beverage machine according to still another specific embodiment of the present invention.
FIG. 13 is a schematic structural diagram of another implementation of a weighing module.
FIG. 14 is a schematic structural diagram of the weighing module in FIG. 13 from another perspective.
FIG. 15 is an exploded view of the weighing module in FIG. 14.
FIG. 16 is a schematic structural diagram of a case of the weighing module in FIG. 14.
FIG. 17 is a schematic structural diagram of a support bracket of the weighing module in FIG. 14.
FIG. 18 is a schematic structural diagram of a support bracket of the weighing module in FIG. 14 from another perspective.
FIG. 19 is a schematic structural diagram of the weighing module in FIG. 14 from another perspective.
FIG. 20 is a schematic structural diagram of the weighing module in FIG. 14 from another perspective.

### DETAILED DESCRIPTION OF THE EMBODIMENTS

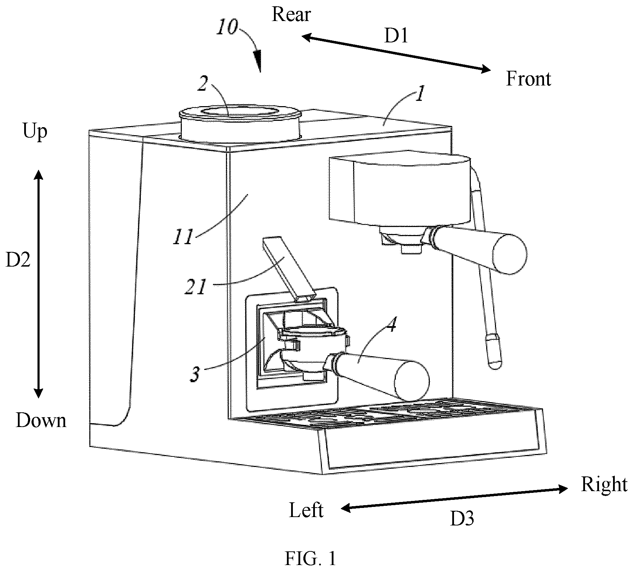

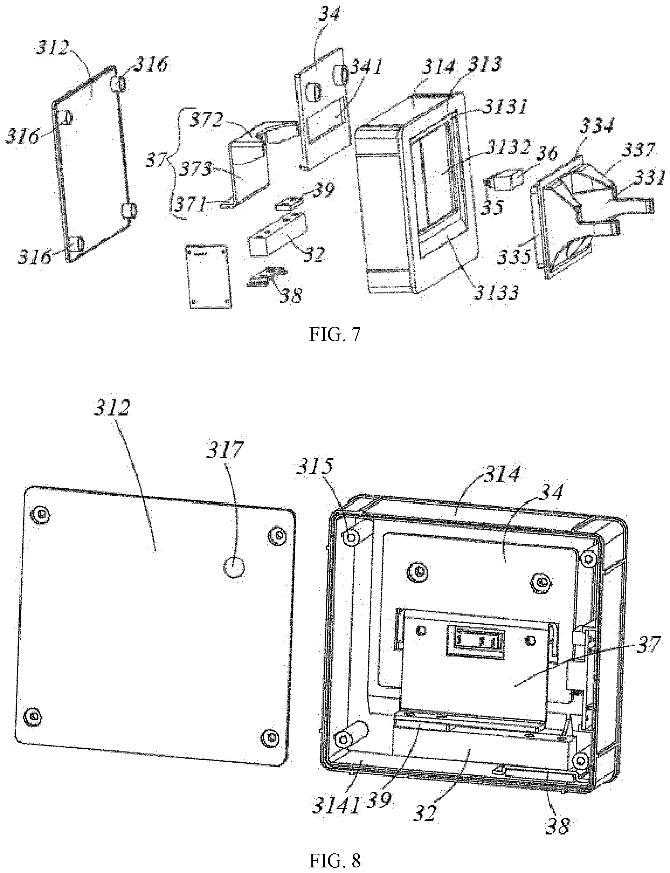

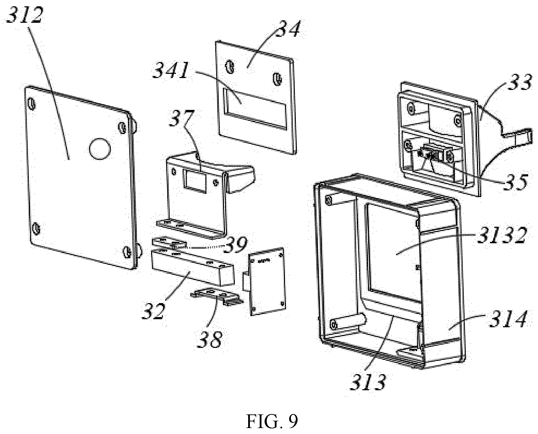

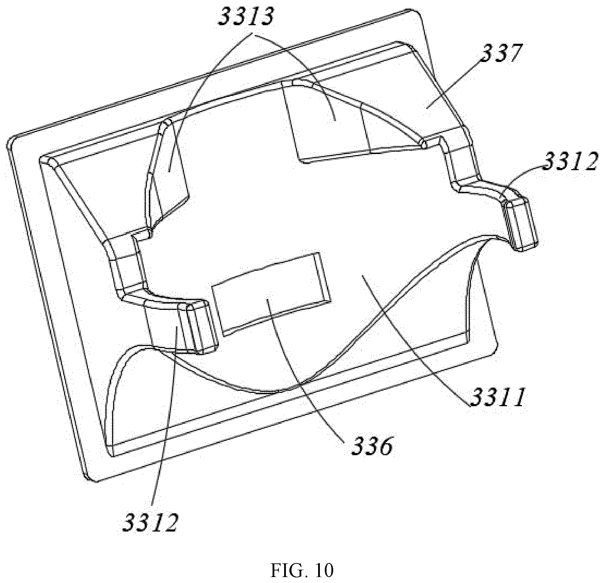

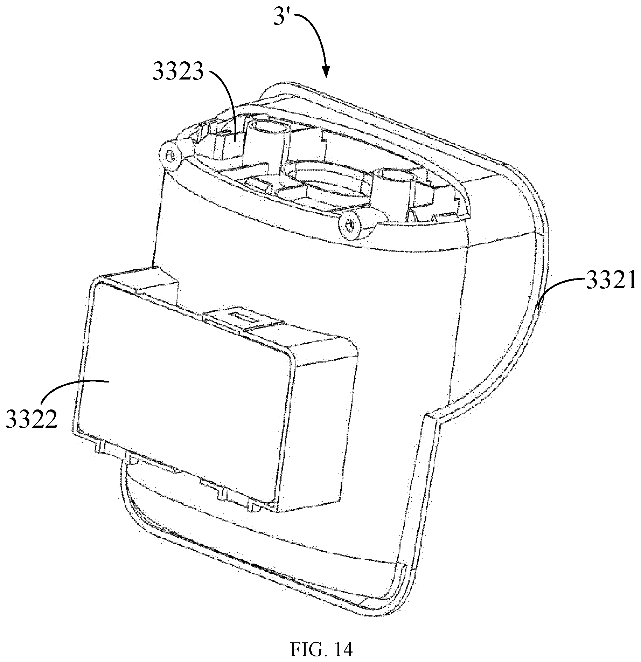

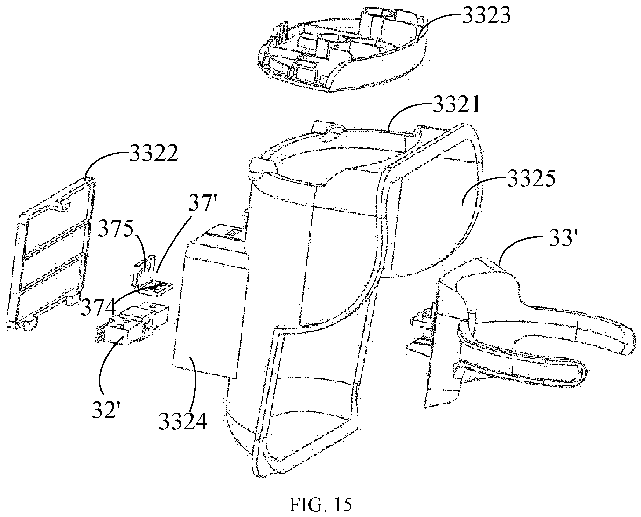

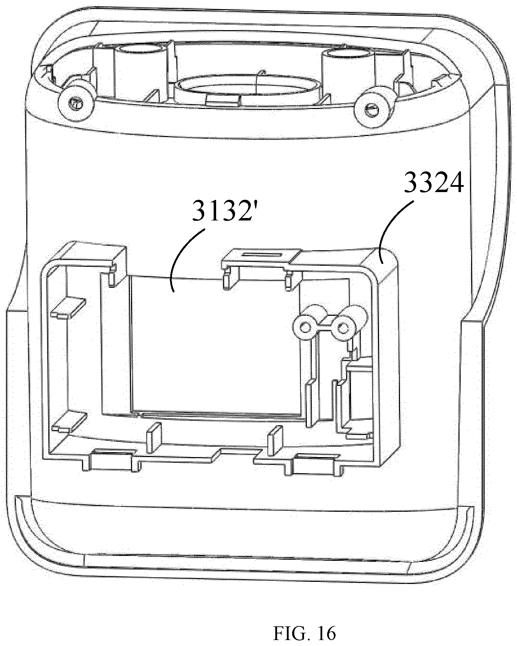

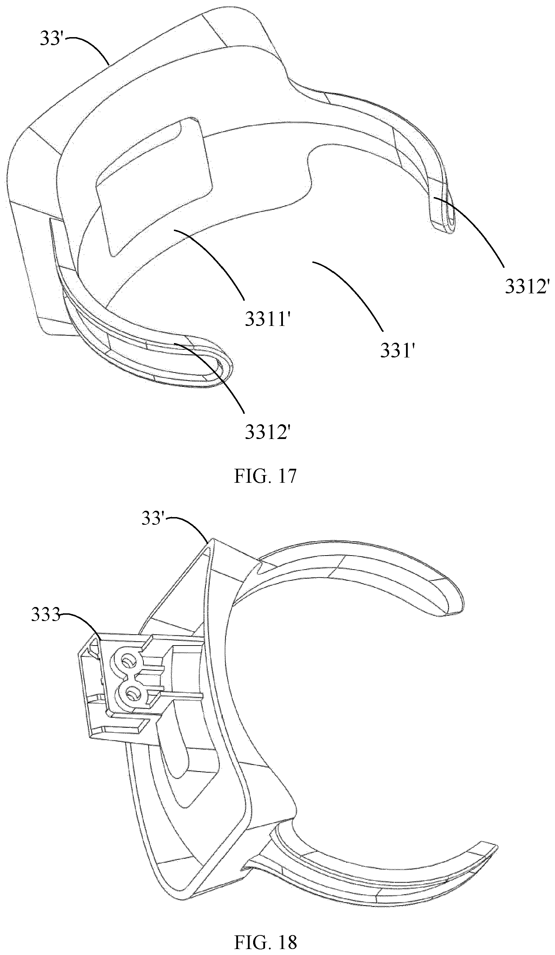

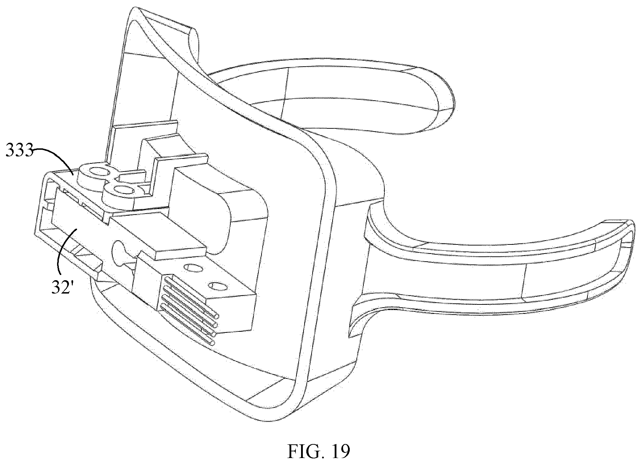

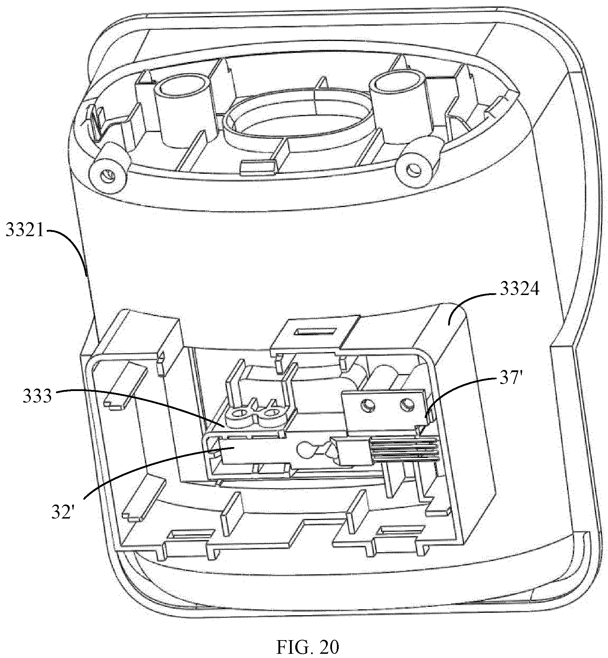

The present invention will be described in detail below with reference to various embodiments illustrated in the accompanying drawings. Please refer to FIG. 1 to FIG. 20, which illustrate the preferred embodiments of the present invention. However, it should be noted that these embodiments are not intended to limit the present invention. Any equivalent modifications or substitutions in terms of function, method or structure made by a person skilled in the art based on these embodiments shall fall within the protection scope of the present invention.

The terms describing positions and directions in the present invention are defined with reference to an operator. A side, facing the operator, of a beverage machine is defined as a front side of the beverage machine, and a side, away from the operator, of the beverage machine is defined as a rear side of the beverage machine. In addition, the terms "first", "second", and the like in the present invention are used only for describing purposes and should not be construed as indicating or implying relative importance or implicitly specifying the quantity of indicated technical features.

A beverage machine in a specific embodiment of the present invention is shown in FIG. 1 to FIG. 12, and the beverage machine is used for users to prepare beverages.

In the following, the beverage machine will be specifically described by taking a coffee machine 10 for preparing coffee as an example. However, it should be noted that the technical spirit involved in the following embodiments may be alternatively applied to other beverage machines.

Please refer to FIG. 1, the coffee machine 10 includes a housing 1, a feeding assembly 2 disposed inside the housing 1, and a control unit for controlling the coffee machine 10 to operate, and the feeding assembly 2 is communicatively connected to the control unit.

In a specific embodiment, the feeding assembly 2 is configured to provide a powder ingredient. As for the coffee machine 10, the feeding assembly 2 is configured to provide coffee powder.

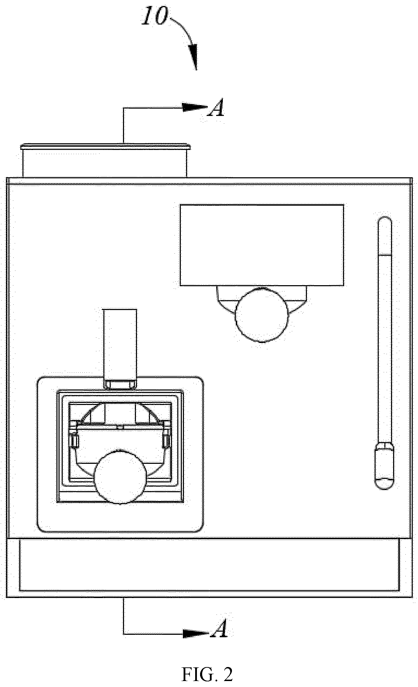

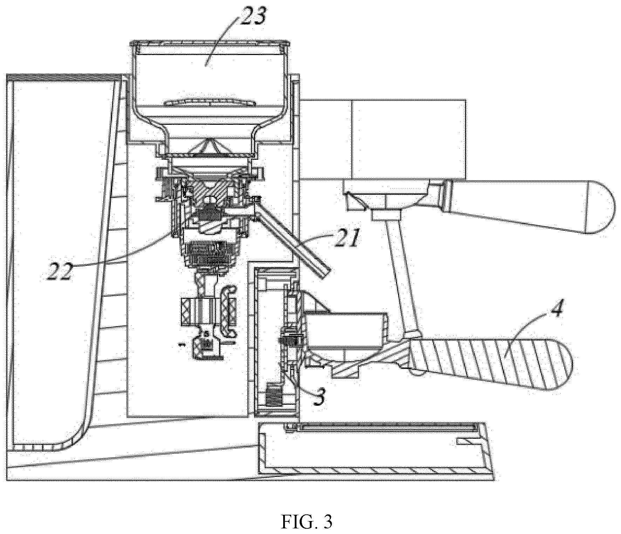

Specifically, as shown in FIG. 2 and FIG. 3, the feeding assembly 2 includes a grinding mechanism 22 disposed inside the housing 1, a bean box 23 disposed at an inlet of the grinding mechanism 22 and a discharge pipe 21 disposed at an outlet of the grinding mechanism 22. The grinding mechanism 22 is communicatively connected to the control unit. When the beverage machine is the coffee machine 10, coffee beans are placed in the bean box 23. After the coffee machine 10 receives a signal that users need coffee powder, the coffee beans in the bean box 23 enter the grinding mechanism 22, the grinding mechanism 22 is then activated to grind the coffee beans into the coffee powder, and finally the coffee powder is discharged through the discharge pipe 21.

Specifically, the housing 1 includes a first sidewall 11 located at a discharge side, the first sidewall 11 is provided with a through hole, and a discharge end of the discharge pipe 21 extends out of the through hole. Therefore, users may receive the powder ingredient discharged through the discharge pipe 21, from an exterior of the housing 1.

It may be understood that the above-mentioned discharge side is a side where the discharge end of the discharge pipe 21 is located. In a specific embodiment, the above-mentioned discharge side is a front side of the housing 1, and the first sidewall 11 refers to a front wall of the housing 1, so as to facilitate operation of users. Of course, the present invention is not limited thereto.

As shown in FIG. 3, a space where the grinding mechanism 22 is located within the housing 1 belongs to an interior/internal space of the housing 1, which is not visible to users during normal operation. A space where the discharge end, away from the grinding mechanism 22, of the discharge pipe 21 is located is an exterior/external space of the housing 1, which is visible to users during normal operation.

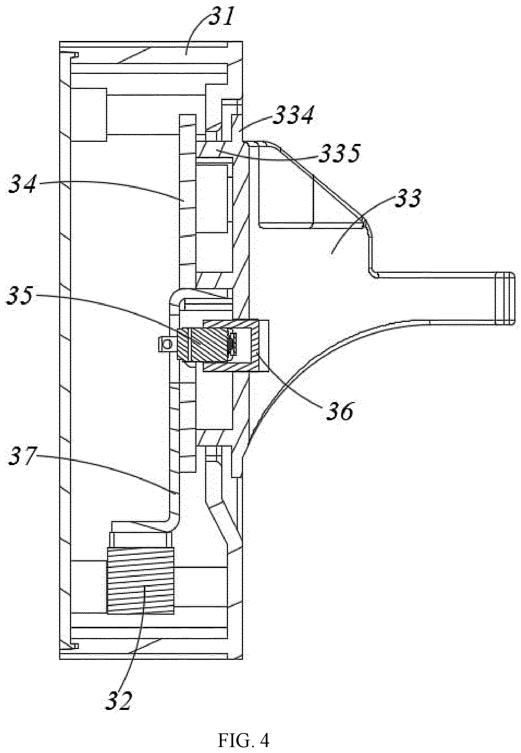

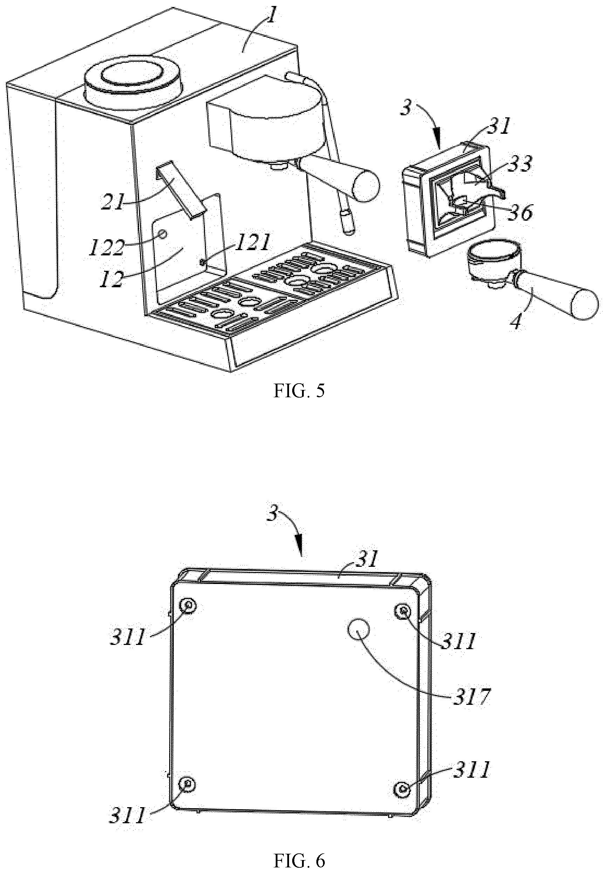

As shown in FIG. 4 and FIG. 5, an outer wall surface of the first sidewall 11 is provided with a mounting portion 12. The coffee machine 10 further includes a weighing module 3 mounted on the mounting portion 12. The weighing module 3 includes a case 31 having a mounting space, a weighing sensor 32 disposed within the mounting space and a support member that cooperates with the weighing sensor 32, and the weighing sensor 32 is communicatively connected to the control unit. The case 31 is configured to be mounted on the mounting portion 12, so that the weighing module 3 is connected to the mounting portion 12. The support member is configured to support a powder ingredient supplied by the feeding assembly 2 directly or indirectly, and the weighing sensor 32 is configured to detect a weight of the powder ingredient.

The discharge pipe 21 is located above the weighing module 3. The support member is located on a discharge path of the discharge pipe 21. Specifically, the support member is located below the discharge end of the discharge pipe 21, the powder ingredient discharged through the discharge pipe 21 can fall into the support member under an action of its own gravity, at which time the weighing sensor 32 obtains the weight of the powder ingredient within the support member. When the weight of the powder ingredient reaches a preset amount, the weighing sensor 32 sends a feedback signal to the control unit, and the grinding mechanism 22 is controlled by the control unit to stop working, so as to halt supply of the powder ingredient, thereby accurately controlling the amount of power ingredient dispensed. Subsequently, the coffee powder can be extracted with a preset amount of water, greatly improving consistency of a coffee extraction taste.

The feeding assembly 2 is disposed inside the housing 1, while the case 31 is disposed outside the housing 1. A space defined by the case 31 (i.e., the mounting space mentioned below) and a space defined by the housing 1 are mutually independent and isolated. The weighing sensor 32 is mounted within the mounting space, and the feeding assembly 2 is mounted within the space defined by the housing 1.

In the coffee machine 10 of the present invention, the weighing sensor 32 is modularized into the weighing module 3, and the weighing module 3 is mounted outside the housing 1, and a space defined by the weighing module 3 is isolated from an internal space of the housing 1, so that powder residue inside the housing 1 can be prevented from depositing on the weighing sensor 32, which not only improves measurement accuracy of the weighing module 3, but also facilitates assembly between the weighing module 3 and the housing 1, and allows for easy removal of the weighing module 3 for maintenance and repair.

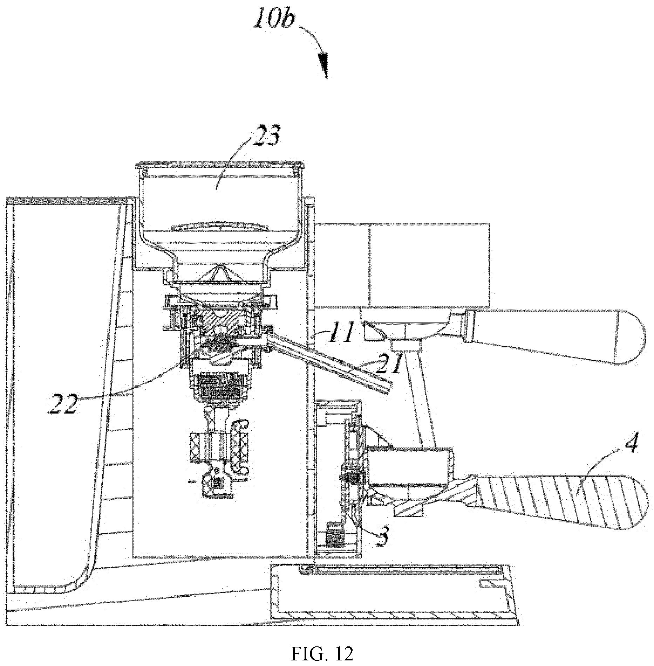

As shown in FIG. 5, in a specific embodiment, the mounting portion 12 is a groove recessed from an outer wall surface of the first sidewall 11 toward an internal space of the housing 1. In this case, the outer wall surface of the first sidewall 11 is not a flat plane but has a recessed portion. The weighing module 3 may be partially mounted within the groove, i.e., the weighing module 3 may be directly disposed on the outer wall surface of the first sidewall 11, or may also be disposed within the recessed portion. In the case that the weighing module 3 is disposed within the recessed portion, the weighting module 3 may be entirely located within a space of the recessed portion or partially protrude outside the space of the recessed portion, and the specific embodiments are explained below. On one hand, at least a part of the case 31 is accommodated within the groove, thereby improving overall appearance effect of the coffee machine 10; and on the other hand, the discharge end can be closer to a central axis of a support space of the support member, so as to avoid the powder ingredient discharged through the discharge end from accumulating at a feed inlet of the support space of the support member, and avoid the powder ingredient discharged through the discharge end from entering a gap between the support member and the case 31, which could lead to powder jamming and consequently render the support member unable to move normally to drive deforming of the weighing sensor 32, thereby ensuring measurement accuracy of the weighing module 3. In this embodiment, as shown in FIG. 3 and FIG. 4, the weighing module 3 is entirely located within the space of the recessed portion. Of course, the present invention is not limited thereto. In still another specific embodiment about the coffee machine 10b shown in FIG 12, the outer wall surface of the first sidewall 11 is a flat plane. In this case, the mounting portion 12 is a part of the flat plane. After the weighing module 3 is mounted on the mounting portion 12, the weighing module 3 is entirely located outside the housing 1.

It may be known that the outer wall surface of the first sidewall 11 may also have a protrusion portion in addition to being a flat plane or having a recessed portion.

The support space of the above-mentioned support member refers to a space used to support the powder ingredient in the support member.

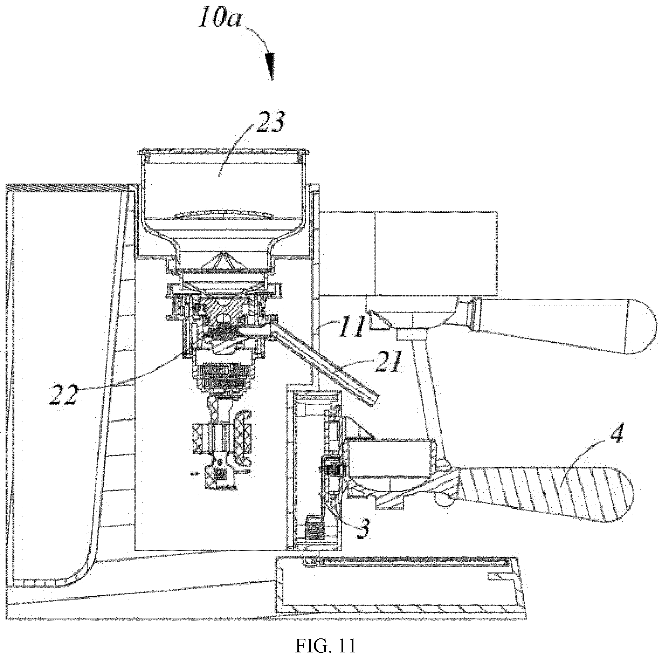

In a specific embodiment, as shown in FIG. 3, a depth of the groove is consistent with a thickness of the case 31 along a forward and backward direction. After the weighing module 3 is mounted within the groove, a front surface of the case 31 is flush with the first sidewall 11, thereby further improving overall appearance effect of the coffee machine 10. In this case, the support member is located at the front wall of the case 31. Of course, the present invention is not limited thereto. In another specific embodiment about the coffee machine 10a shown in FIG. 11, a depth of the groove is less than a thickness of the case 31 along a forward and backward direction. After the weighing module 3 is mounted within the groove, the case 31 partially protrudes outside the groove.

The weighing module 3 is detachably connected to the mounting portion 12, facilitating maintenance and repair of the weighing module 3.

In a specific embodiment, as shown in FIG. 5 and FIG. 6, a fixing connection between the case 31 and the mounting portion 12 is achieved by means of fasteners (e.g., screws) located inside the housing 1. Specifically, the mounting portion 12 is provided with a plurality of first fastening holes 121 arranged through the mounting portion 12, i.e., a bottom of the groove is provided with the plurality of first fastening holes 121 arranged through the bottom of the groove, and the case 31 includes a plurality of second fastening holes 311 that are in one-to-one correspondence with the plurality of first fastening holes 121. In this case, the second fastening holes 311 may be blind holes. After the weighing sensor 32 and the like are all mounted into the case 31, the first fastening holes 121 are aligned with respective second fastening holes 311, and then the screws are screwed into both the first fastening holes 121 and respective second fastening holes 311 from an interior of the housing 1, thereby achieving the fixing connection between the weighing module 3 and the mounting portion 12. The screws are configured to connect the case 31 from the interior of the housing 1, so that the screws are not exposed on a front side of the coffee machine 10, thereby improving aesthetic appearance of the front side of the coffee machine 10.

In other embodiments, the screws may also be configured to be screwed into the second fastening holes 311 and respective first fastening holes 121 from a front side of the case 31, thereby achieving the fixing connection between the weighing module 3 and the mounting portion 12. In this case, it is more convenient for disassembly and assembly between the weighing module 3 and the mounting portion 12. In a case that the screws are configured to be screwed into the second fastening holes 311 and the respective first fastening holes 121 from the front side of the case 31, the second fastening holes 311 are through holes penetrating from front to rear. In this case, a decorative strip needs to be additionally disposed to cover the second fastening holes 311, so as to improve aesthetic appearance of the front side of the coffee machine 10.

Specifically, as shown in FIG. 4 and FIG. 7 to FIG. 9, the case 31 includes a second sidewall 312 for fixing to the mounting portion 12, a third sidewall 313 disposed opposite to the second sidewall 312, and a peripheral wall 314 extending from a periphery of the third sidewall 313 toward the second sidewall 312. The second sidewall 312, the third sidewall 313 and the peripheral wall 314 together enclose to form the mounting space. The third sidewall 313 and the peripheral wall 314 are formed as an integral frame structure, and the second sidewall 312 is detachably connected to the frame structure, i.e., components of the weighing module 3 that need to be mounted into the mounting space, such as the weight sensor 32, may be assembled into the mounting space through an opening on a side, away from the third sidewall 313, of the frame structure, thereby facilitating assembly of the weighing module 3.

Specifically, the third sidewall 313 or the peripheral wall 314 is provided with first fixing posts 315 protruding toward the second sidewall 312, and the second sidewall 312 is provided with second fixing posts 316 protruding toward the third sidewall 313. The first fixing posts 315 are in one-to-one correspondence with the second fixing posts 316. Ends of the first fixing posts 315 and ends of respective second fixing posts 316 which cooperate with each other are configured as plug-in structures. The first fixing posts 315 and the second fixing posts 316 are both provided with screw holes. After each first fixing post 315 is interconnected with its respective second fixing post 316, the screw holes in the first fixing posts 315 and the screw holes in the second fixing posts 316 together form the second fastening holes 311. Thus, the screws are screwed into both the first fastening holes 121 and the respective second fastening holes 311, which not only achieves the fixing connection between the weighing module 3 and the mounting portion 12, but also a fixing connection between the second sidewall 312 and the frame structure, resulting in a simple structure.

It may be seen that, in an embodiment where the first sidewall 11 is the front wall of the housing 1, the second sidewall 312 is a rear wall of the case 31, and the third sidewall 313 is a front wall of the case 31.

In a specific embodiment, the support member is disposed at the third sidewall 313. The third sidewall 313 has a mounting opening 3132, and the support member is connected to the weighing sensor 32 located within the mounting space, from the mounting opening 3132.

Specifically, the third sidewall 313 has a receiving groove 3131 that is inwardly recessed, and the mounting opening 3132 is arranged through a middle of a bottom of the receiving groove 3131. On one hand, a part of the support member can be accommodated within the receiving groove 3131, further improving overall appearance effect of the coffee machine 10; and on the other hand, the discharge end can be closer to a central axis of a support space of the support member, so as to avoid the powder ingredient discharged through the discharge end from accumulating at a feed inlet of the support space of the support member, and avoid the powder ingredient discharged through the discharge end from entering a gap between the support member and the case 31, which could lead to powder jamming and consequently render the support member unable to move normally to drive deforming of the weighing sensor 32, thereby ensuring measurement accuracy of the weighing module 3.

It should be understood that an edge of the mounting opening 3132 refers to a remaining bottom of the receiving groove 3131.

In a specific embodiment, the support member is a support bracket 33 for supporting a powder container 4, i.e., the above-mentioned support space of the support member refers to a support space of the powder container 4. In this specific embodiment, the support member indirectly supports the powder ingredient supplied by the feeding assembly through the powder container 4, and the weighing sensor 32 is configured to detect the weight of the powder ingredient in the powder container 4. In other embodiments, the support member may also have a support space itself for supporting the powder ingredient. In this specific embodiment, the support member directly supports the powder ingredient supplied by the feeding assembly, and the weighing sensor 32 is configured to detect the weight of the powder ingredient supported by the support member.

As shown in FIG. 4, FIG. 7 and FIG. 10, the support bracket 33 includes a mounting groove 331 for accommodating the powder container 4. The mounting groove 331 is located at a side, away from the mounting space, of the mounting opening 3132, i.e., the mounting groove 331 is located at a front side of the mounting opening 3132 and is open forward to allow users to insert the powder container 4 into the mounting groove 331, from a front side of the coffee machine 10 to a rear side of the coffee machine 10. The mounting groove 331 includes a connecting wall 3311 and two support arms 3312 extending in a same direction from two laterally opposite ends of the connecting wall 3311, and the two support arms 3312 are configured to support two hanging ears of the powder container 4 that are oppositely arranged along a radial direction of the powder container 4.

In the embodiment where the first sidewall 11 is the front wall, the two laterally opposite ends of the above-mentioned connecting wall 3311 refers to a left end of the connection wall 3311 and a right end of the connection wall 3311.

At the same time, a shape of the connecting wall 3311 is an arc that matches an outer peripheral wall of the powder container 4, so as to improve fit between the powder container 4 and the mounting groove 331, thereby improving mounting stability of the powder container 4, and avoiding the powder container 4 falling off.

The support bracket 33 further includes at least one limiting protrusion 3313 protruding from the connecting wall 3311, and the limiting protrusion 3313 is located above the support arm 3312, so as to restrict a movement of the powder container 4 in a height direction. That is, the limiting protrusion 3313 protrudes from an upper end of the connecting wall 3311. After the powder container 4 is mounted in place, the two hanging ears on the left side of the powder container 4 and the right side of the powder container 4 are respectively rested on the two support arms 3312, and a side, facing a front end of the coffee machine 10, of the powder container 4 abuts against a lower surface of the limiting protrusion 3313, which prevents another side, away from the front end of the coffee machine 10, of the powder container 4 from tilting upward, thereby enabling the powder container 4 to be more stably mounted within the mounting groove 331.

In a specific embodiment, a limiting protrusion 3313 protrudes from each of a left side of the connecting wall 3311 and a right side of the connecting wall 3311, that is, the support bracket 33 has an axisymmetric structure. As a result, after the powder container 4 is mounted in place, users do not need to hold the powder container 4, and a side, facing a front end of the coffee machine 10, of the powder container 4 does not tilt upward, allowing the powder container 4 to be stably mounted on the support bracket 33, further improving mounting stability of the powder container 4.

The support bracket 33 further includes a shielding plate 334 located at a side of the mounting opening 3132. Specifically, the shielding plate 334 is located at a side, away from the second sidewall 312, of the mounting opening 3132. After the support bracket 33 is mounted at the third sidewall 313, the shielding plate 334 can shield the mounting opening 3132 from a front side of the mounting opening 3132, so as to improve overall appearance effect of the coffee machine 10.

The weighing module 3 further includes a limiting plate 34 located at another side, away from the shielding plate 334, of the mounting opening 3132. The limiting plate 34 is operatively connected to the shielding plate 334, i.e., the limiting plate 34 and the shielding plate 334 can move synchronously. It may be known that the shielding plate 334 is located at a front side of the mounting opening 3132, and the limiting plate 34 is located at a rear side of the mounting opening 3132.

Specifically, the support bracket 33 further includes a limiting rib 335 disposed on a side, facing the second sidewall 312, of the shielding plate 334 and passing through the mounting opening 3132. When the weighing module 3 is assembled, the limiting plate 34 is first positioned within the mounting space, and then when the support bracket 33 is mounted, the limiting rib 335 is pushed backward from the mounting opening 3132 until the limiting rib 335 abuts against the limiting plate 34, at which point the support bracket 33 is mounted in place. By providing a cooperation between the limiting plate 34 and the limiting rib 335, a mounting position of the support bracket 33 in a forward and backward direction can be restricted, which not only prevents the support bracket 33 from being mounted excessively forward or excessively backward, but also avoids the support bracket 33 from moving in a height direction and a lateral direction, thereby avoiding any impact on measurement accuracy of the weighing module 3 due to a movement of the support bracket 33 during a measurement process.

The limiting plate 34 is fixedly connected to the support bracket 33. Specifically, after the support bracket 33 is mounted in place, the limiting plate 34 is fixedly connected to the support bracket 33 by fasteners (e.g., screws) or other means, achieving an operative connection between the limiting plate 34 and the shielding plate 334.

When a bottom end of the shielding plate 334 is configured to extend beyond an edge of the mounting opening 3132, i.e., the bottom end of the shielding plate 334 protrudes downward beyond the edge of the mounting opening 3132, there is a preset interval between the bottom end of the shielding plate 334 and the third sidewall 313. When a top end of the limiting plate 34 is configured to extend beyond an edge of the mounting port 3132, i.e., the top end of the limiting plate 34 protrudes upward beyond the edge of the mounting opening 3132, there is a preset interval between the top end of the limiting plate 34 and the third sidewall 313. Therefore, it is possible to reserve sufficient deformation space, which does not affect a movement of the support bracket 33 during a measurement process, thereby ensuring measurement accuracy of the weighing module 3.

In a specific embodiment, a dimension of the shielding plate 334 and a dimension of the limiting plate 34 are both slightly greater than a dimension of the mounting opening 3132. A clearance space is provided between the shielding plate 334 and the limiting plate 34, and the edge of the mounting opening 3132 is located within the clearance space. This configuration can reserve sufficient deformation space, which does not affect a movement of the support bracket 33 during a measurement process, thereby ensuring measurement accuracy of the weighing module 3. It may be known that in this case, there is a preset interval between a left end of the shielding plate 334 and the third sidewall 313, and there is also a preset interval between a right end of the shielding plate 334 and the third sidewall 313, so as to facilitate falling of the powder ingredient through the preset intervals, thereby avoiding powder jamming.

Specifically, the receiving groove 3131 includes a sidewall of the receiving groove 3131, there is a preset interval between the left end of the shielding plate 334 and a corresponding sidewall of the receiving groove 3131, and there is also a preset interval between the right end of the shielding plate 334 and a corresponding sidewall of the receiving groove 3131, so as to facilitate falling of the powder ingredient through the preset intervals, thereby avoiding powder jamming.

In this embodiment, the receiving groove 3131 includes multiple sidewalls of the receiving groove 3131. The sidewall of the receiving groove 3131 connected to a bottom end of a bottom of the receiving groove 3131 has a first guiding inclined surface 3133, i.e., the sidewall, on a side away from the feeding assembly 2 along a falling direction of the powder ingredient, of the receiving groove 3131 is provided with the first guiding inclined surface 3133. Specifically, the sidewall of the receiving groove 3131 connected to the bottom end of the bottom of the receiving groove 3131 is integrally formed as the first guiding inclined surface 3133, i.e., the first guiding inclined surface 3133 extends forward and downward from the connection end with the bottom of the receiving groove 3131, allowing residual coffee powder to smoothly flow down along the first guiding inclined surface 3133 without accumulation, thereby ensuring a moving space of the support bracket 33.

Further, an inner wall surface of the connecting wall 3311 is provided with a guide rail 336 extending in a mounting direction of the powder container 4, i.e., the guide rail 336 extends in a forward and backward direction. The weighing module 3 further includes a sensing element 35 and a button 36 for triggering the sensing element 35. The sensing element 35 is communicatively connected to the control unit. The button 36 is slidably connected within the guide rail 336, and at least a part of the button 36 protrudes from the inner wall surface. When users push the powder container 4 from a front side of the coffee machine 10 to a rear side of the coffee machine 10 until the powder container 4 is in contact with the button 36, and continue to push the powder container 4 backward, the powder container 4 drives the button 36 to move backward along the guide rail 336 until the sensing element 35 is triggered by the button 36. After the sensing element 35 is triggered by the button 36, the sensing element 35 sends a signal to the control unit, the control unit determines that the powder container 4 is mounted in place, and then the grinding mechanism 22 may be continually controlled to activate powder supply through user operation.

In a specific embodiment, the sensing element 35 is a micro-switch. In the prior art, a button is generally designed to be fully accommodated within a guide rail, and a protruding lug for pushing the button is additionally provided in a powder container. When the powder container is mounted, it is necessary to ensure that the protruding lug is aligned with the guide rail/button in order to push the button to trigger a sensing element, thereby achieving a proper installation of the powder container.

In this embodiment, the button is configured to protrude at least partially from the inner wall surface, so that when the powder container 4 is mounted, no alignment is required, and simply pushing the powder container 4 backward may cause an outer wall surface of the powder container 4 to push the button 36 backward, thereby simplifying installation of the powder container 4. In this embodiment, users only need to place the powder container 4 directly on the support bracket 33 without any additional operation.

The inner wall surface of the connecting wall 3311 refers to a bottom surface of the mounting groove 331, i.e., a front wall surface of the connecting wall 3311.

In a specific embodiment, a top portion of the support bracket 33 is provided with a second guiding inclined surface 337, and in a direction away from the first sidewall 11, the second guiding inclined surface 337 slopes downward, i.e., the second guiding inclined surface 337 extends obliquely downward from rear to front, so as to prevent the powder ingredient from accumulating on the support bracket 33.

Further, the peripheral wall 314 includes a bottom wall 3141 located between a bottom end of the second sidewall 312 and a bottom end of the third sidewall 313, and the weighing sensor 32 is disposed at the bottom wall 3141. Specifically, the weighing sensor 32 includes a fixing end and a detection end that are oppositely disposed, the fixing end of the weighing sensor 32 is disposed at the bottom wall 3141, and the connecting bracket 33 is connected to the detection end of the weighing sensor 32.

In this embodiment, the detection end of the weighing sensor 32 is configured to obtain deformation of the weighing sensor 32, and the weight of the powder ingredient is calculated by the control unit after the deformation is sent to the control unit. In other embodiments, the detection end of the weighing sensor 32 is also configured to obtain the weight of the powder ingredient directly.

A first spacer 38 is disposed between the fixing end of the weighing sensor 32 and the bottom wall 3141, so that a part, except for the fixing end, of the weighing sensor 32 is in a suspended state, thereby avoiding any impact on measurement accuracy of the weighing sensor 32 due to interference between the bottom wall 3141 and the detection end of the weighing sensor 32.

In a specific embodiment, the first spacer 38 is a metal spacer block, which can ensure that a contact surface between the weighing sensor 32 and the first spacer 38 is relatively flat, thereby avoiding any impact on measurement accuracy of the weighing sensor 32 due to deformation of the first spacer 38.

In this embodiment, the weighing sensor 32 is arranged to extend in a lateral direction, and an extending direction of the weighing sensor 32 is consistent with an arrangement direction of the two support arms 3312 of the support bracket 33, i.e., the fixing end and the detection end of the weighing sensor 32 are arranged in a lateral direction of the first sidewall 11, and the weighing sensor 32 is horizontally disposed. It may be known that, on one hand, the two support arms 3312 of the support bracket 33 are arranged in a lateral direction and thus occupy a certain space in a width direction of the coffee machine 10, and if the weighing sensor 32 is configured to be arranged in a forward and backward direction, the entire weighting module 3 would occupy a relatively large amount of space in both the width direction and the forward and backward direction, and therefore, a space of the weighing module 3 in the forward and backward direction can be effectively saved in a case that the weighing sensor 32 is horizontally disposed, resulting in a relatively compact overall structure of the weighing module 3; and on the other hand, a distance between the weighing sensor 32 and the grinding mechanism 22 can be increased, thereby reducing weighing inaccuracy caused by a vibration from the grinding mechanism 22.

The weighing module 3 further includes a connecting bracket 37 connected to the detection end of the weighing sensor 32, an end, away from the weighing sensor 32, of the connecting bracket 37 is located at the mounting opening 3132, and the support bracket 33 is connected to the end, away from the weighing sensor 32, of the connecting bracket 37, from the mounting opening 3132. The additional provided connecting bracket 37 is designed to connect the weighing sensor 32 and the support bracket 33, thereby enhancing versatility of the support bracket 33.

Specifically, the connecting bracket 37 is of a Z-like structure, and the connecting bracket 37 includes a first plate 371 connected to the detection end of the weighing sensor 32, a second plate 372 connected to the support bracket 33, and a connecting plate 373 that connects the first plate 371 and the second plate 372. The first plate 371 and the second plate 372 are both perpendicular to the connecting plate 373, so as to facilitate a fixing connection between the connecting bracket 37 and the detection end of the weighing sensor 32 and a fixing connection between the connecting bracket 37 and the support bracket 33, and improve supporting performance of the connecting bracket 37 for the support bracket 33.

In a specific embodiment, the limiting plate 34 has a clearance hole 341 to allow the second plate 372 to pass through. The second plate 372 is inserted into the clearance hole 341, so that the limiting plate 34 can be pre-positioned within the mounting space.

Further, a second spacer 39 is disposed between the detection end of the weighing sensor 32 and the connecting bracket 37, so that other parts of the connecting bracket 37 except for a part corresponding to the detection end of the weighing sensor 32 are in a suspended state, i.e., the connecting bracket 37 only applies an external force to the detection end of the weighing sensor 32, thereby avoiding any impact on measurement accuracy of the weighing sensor 32 due to interference between the connecting bracket 37 and other parts of the weighing sensor 32 except for the detection end.

In a specific embodiment, the second spacer 39 is a metal spacer block, which can avoid interference between the connecting bracket 37 and other parts of the weighing sensor 32 except for the detection end due to deformation of the second spacer 39, thereby ensuring measurement accuracy of the weighing sensor 32.

In some embodiments, as shown in FIG. 5 and FIG. 6, the mounting portion 12 is provided with a first contact 122 electrically connected to the control unit, and the case 31 is provided with a second contact 317 configured to conductively connect to the first contact 122, and the second contact 317 is electrically connected to the weighing sensor 32, the sensing element 35 and the like that are in the weighing module 3, so that the weighing module 3 and the housing 1 can achieve electrical signal conduction through a contact between the contacts, which is relatively convenient. It may be known that the first contact 122 may also be disposed on a peripheral wall of the groove of the mounting portion 12, and in this case, the second contact 317 is correspondingly disposed on the peripheral wall 314 of the weighing module 3.

Further, a periphery of a contact portion between the case 31 and the mounting portion 12 is provided with a sealing structure. Specifically, the sealing structure, such as a sealing ring, is provided between the peripheral wall 314 and the peripheral wall of the groove, so as to prevent impurities such as water and powder residue from entering a gap between the case 31 and the mounting portion 12, thereby avoiding any impact on conductive performance between the first contact 122 and the second contact 317.

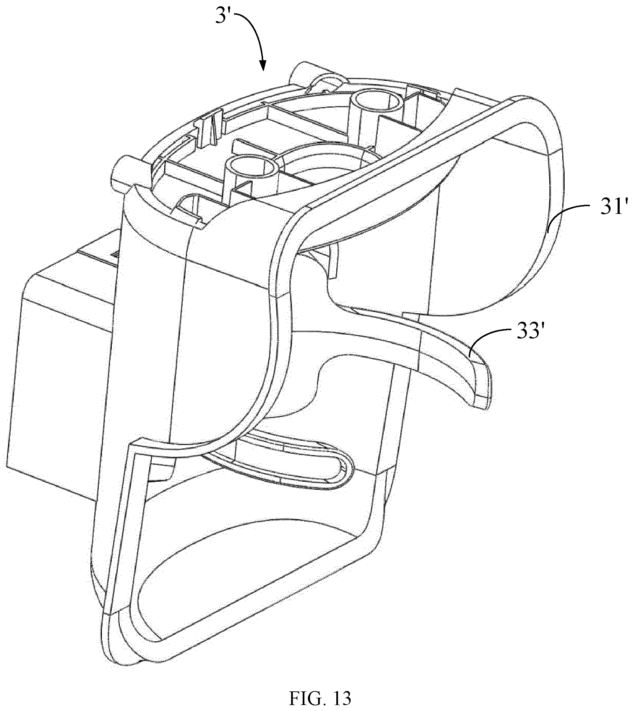

A beverage machine in another specific embodiment of the present invention is shown in FIG. 13 to FIG. 20, and the beverage machine is used for users to prepare beverages. Except for the weighing module 3', this beverage machine is identical to the beverage machine described in the aforementioned embodiments. The similarities are not repeated herein; for details, please refer to the beverage machine described in the aforementioned embodiments. The following description focuses on differences between the beverage machine in this embodiment and the beverage machine in the aforementioned embodiments.

It should be understood that a position of the weighing module 3 in FIGS 1, 3, 5, 11, and 12 is also applicable to the weighing module 3'. In other words, the weighing module 3' may also be mounted on the mounting portion 12.

The weighing module 3' includes a case 31' having a mounting space, a weighing sensor 32' disposed within the mounting space and a support member that cooperates with the weighing sensor 32', and the weighing sensor 32' is communicatively connected to the control unit.

In a specific embodiment, the casing 31' includes an outer shell 3321 for fixing to the mounting portion 12, a rear cover 3322 located between the outer shell 3321 and the first sidewall 11 and connected to the outer shell 3321, and a top cover 3323 located above the outer shell 3321 and connected to the outer shell 3321. The outer shell 3321 includes a main shell body 3325 and a protrusion 3324 extending from a side, close to the rear cover 3322, of the main shell body 3325 toward the rear cover 3322. The mounting space includes a space defined by the main shell body 3325 and a space enclosed jointly by the protrusion 3324 and the rear cover 3322.

In a specific embodiment, the support member is located in the outer shell 3321. Specifically, a part of the support member is disposed within the space defined by the main shell body 3325, while another part of the support member is disposed within the space enclosed jointly by the protrusion 3324 and the rear cover 3322. A mounting opening 3132' is provided on a side, away from the rear cover 3322, of the protrusion 3324, the another part of the support member is connected to the weighing sensor 32' located within the space enclosed jointly by the protrusion 3324 and the rear cover 3322, from the mounting opening 3132'.

In a specific embodiment, the support member is a support bracket 33' for supporting the powder container 4. The support bracket 33' includes a mounting groove 331' for accommodating the powder container 4. The mounting groove 331' includes a connecting wall 3311' and support arms 3312' extending in a same direction from two laterally opposite ends of the connecting wall 3311', and the support arms 3312' are configured to support the hanging ears of the powder container 4. The support member further includes a support ring 333 passing through the mounting opening 3132' for connecting to the weighing sensor 32'. The support ring 333 is located within the space enclosed jointly by the protrusion 3324 and the rear cover 3322.

The weighing module 3' further includes a connecting bracket 37'. The weighing sensor 32' includes a fixing end and a detection end that are oppositely disposed. The fixing end of the weighing sensor 32' is connected to the casing 31' through the connecting bracket 37', and the support ring 333 is connected to the detection end of the weighing sensor 32'. Specifically, the connecting bracket 37' is fixed to both the weighing sensor 32' and the outer shell 3321 with fasteners (e.g., screws). An end, fixed to the connecting bracket 37', of the weighing sensor 32' serves as the fixing end of the weighing sensor 32'. The support ring 333 is fixed to the detection end (also known as a cantilever end, i.e., a part of the weighing sensor 32' other than the fixing end that is in a suspended state) of the weighing sensor 32', so as to achieve the purpose of weighing.

Specifically, the connecting bracket 37' is of a L-like structure, and the connecting bracket 37' includes a third plate 374 connected to the fixing end of the weighing sensor 32' and a fourth plate 375 connected to the casing 31'. The third plate 374 is perpendicular to the fourth plate 375.

The weighing sensor 32' is arranged to extend in a lateral direction, and an extending direction of the weighing sensor 32' is consistent with an arrangement direction of the two support arms 3312' of the support bracket 33', i.e., the fixing end and the detection end of the weighing sensor 32' are arranged in a lateral direction of the first sidewall 11, and the weighing sensor 32' is horizontally disposed.

Unlike the beverage machine described in the aforementioned embodiments, the beverage machine in this embodiment does not have the guide rail 336, the sensing element 35 and the button 36. The beverage machine in this embodiment determines if the powder container 4 is mounted in place directly using an algorithm. For example, a weight threshold is set, and if the weighing sensor 32' detects a weight exceeding the weight threshold, the control unit determines that the powder container 4 is mounted in place.

Unlike the beverage machine described in the aforementioned embodiments, the beverage machine in this embodiment does not have the first contact 122 and the second contact 317. When a weight signal is transmitted by the beverage machine in this embodiment, the weight signal is directly transmitted through a signal line connected to the control unit.

The feeding assembly 2 is disposed inside the housing 1, while the case 31' is disposed outside the housing 1. A space defined by the case 31' (i.e., the mounting space) and a space defined by the housing 1 are mutually independent and isolated. The weighing sensor 32' is mounted within the mounting space, and the feeding assembly 2 is mounted within the space defined by the housing 1.

Those skilled in the art can understand that, in the present invention, the forward and backward direction refers to the direction shown as D1 in FIG. 1, the height direction refers to the direction shown as D2 in FIG. 1, and both the width direction and the lateral direction refer to the direction shown as D3 in FIG. 1.

In the beverage machine of the embodiments of the present invention, the weighing sensor 32, 32' is modularized into the weighing module 3, 3', and the weighing module 3, 3' is mounted outside the housing 1, and a space defined by the weighing module 3, 3' is isolated from an internal space of the housing 1, so that powder residue inside the housing 1 can be prevented from depositing on the weighing sensor 32, 32', which not only improves measurement accuracy of the weighing module 3, 3', but also facilitates assembly between the weighing module 3, 3' and the housing 1, allowing for easy removal of the weighing module 3, 3' for maintenance and repair.

It should be understood that although this specification is described according to the embodiments, but not every embodiment only includes one independent technical solution. This description of the specification is merely for the purposes of clarity, a person skilled in the art should regard the specification as a whole, and the technical solutions in different embodiments may also be appropriately combined, to form other embodiments that may be understood by a person skilled in the art.

## Claims

1. A beverage machine (10, 10a, 10b), comprising a housing (1), a feeding assembly (2) disposed inside the housing (1), and a control unit,
wherein the housing (1) comprises a first sidewall (11), an outer wall surface of the first sidewall (11) is provided with a mounting portion (12); and
the beverage machine (10, 10a, 10b) further comprises a weighing module (3, 3') mounted on the mounting portion (12) and communicatively connected to the control unit, the weighing module (3, 3') comprises a case (31, 31') having a mounting space, a weighing sensor (32, 32') disposed within the mounting space, and a support member that cooperates with the weighing sensor (32, 32'), the support member is configured to hold a powder ingredient supplied by the feeding assembly (2) directly or indirectly, and the weighing sensor (32, 32') is configured to detect a weight of the powder ingredient.

2. The beverage machine (10, 10a, 10b) according to claim 1, wherein the weighing module (3, 3') is detachably connected to the mounting portion (12).

3. The beverage machine (10, 10a, 10b) according to claim 1 or 2, wherein the mounting portion (12) is a groove recessed from an outer wall surface of the first sidewall (11) toward an internal space of the housing (1), and the weighing module (3, 3') is partially mounted within the groove.

4. The beverage machine (10, 10a, 10b) according to any one of claims 1 to 3, wherein the case (31, 31') is disposed outside the housing (1), and the mounting space and a space defined by the housing (1) are mutually independent and isolated.

5. The beverage machine (10, 10a, 10b) according to any one of claims 1 to 4, wherein the case (31) comprises a second sidewall (312) for fixing to the mounting portion (12), a third sidewall (313) disposed opposite to the second sidewall (312), and a bottom wall (3141), the bottom wall (3141) is located between a bottom end of the second sidewall (312) and a bottom end of the third sidewall (313), and the weighing sensor (32) is disposed at the bottom wall (3141); and
the third sidewall (313) is provided with a mounting opening (3132), the weighing module (3) further comprises a connecting bracket (37) disposed on the weighing sensor (32), an end, away from the weighing sensor (32), of the connecting bracket (37) is located at the mounting opening (3132), and the support member is disposed at an end, away from the weighing sensor (32), of the connecting bracket (37), from the mounting opening (3132);
preferably, the weighing sensor (32) comprises a detection end and a fixing end that are oppositely disposed, the fixing end is disposed at the bottom wall (3141), and the detection end is disposed on the connecting bracket (37),
wherein a first spacer (38) is disposed between the fixing end and the bottom wall (3141); and/or,
a second spacer (39) is disposed between the detection end and the connecting bracket (37).

6. The beverage machine (10, 10a, 10b) according to any one of claims 1 to 4, wherein the case (31) comprises a second sidewall (312) for fixing to the mounting portion (12) and a third sidewall (313) disposed opposite to the second sidewall (312), and the third sidewall (313) is provided with a mounting opening (3132); the support member comprises a shielding plate (334) located at a side of the mounting opening (3132), the weighing module (3) further comprises a limiting plate (34) located at another side of the mounting opening (3132) and operatively connected to the shielding plate (334), and the shielding plate (334) is located at a side, away from the second sidewall (312), of the limiting plate (34); and
a clearance space is provided between the shielding plate (334) and the limiting plate (34), and an edge of the mounting opening (3132) is located within the clearance space.

7. The beverage machine (10, 10a, 10b) according to any one of claims 1 to 4, wherein the case (31) comprises a second sidewall (312) for fixing to the mounting portion (12) and a third sidewall (313) disposed opposite to the second sidewall (312), the third sidewall (313) has a receiving groove (3131) that is inwardly recessed, and a bottom of the receiving groove (3131) is provided with a mounting opening (3132) that cooperates with the support member; and
the support member comprises a shielding plate (334) that cooperates with the mounting opening (3132), the shielding plate (334) is located at a side, away from the second sidewall (312), of the mounting opening (3132), and there is a preset interval between the shielding plate (334) and a sidewall of the receiving groove (3131); and the sidewall, on a side away from the feeding assembly (2) along a falling direction of the powder ingredient, of the receiving groove (3131) is provided with a first guiding inclined surface (3133).

8. The beverage machine (10, 10a, 10b) according to any one of claims 1 to 4, wherein the support member is a support bracket (33) for supporting a powder container (4), and the support bracket (33) comprises:
a mounting groove (331) for accommodating the powder container (4), the mounting groove (331) comprising a connecting wall (3311) and two support arms (3312) extending in a same direction from two opposite ends of the connecting wall (3311), and the two support arms (3312) being configured to support a hanging ear of the powder container (4); and
at least one limiting protrusion (3313) protruding from the connecting wall (3311), the at least one limiting protrusion (3313) being located above the two support arms (3312), to restrict a movement of the powder container (4) in a height direction.

9. The beverage machine (10, 10a, 10b) according to any one of claims 1 to 4, wherein the support member is a support bracket (33) for supporting a powder container (4), the support bracket (33) comprises a mounting groove (331) for accommodating the powder container (4), the mounting groove (331) comprises a connecting wall (3311) and two support arms (3312) extending in a same direction from two opposite ends of the connecting wall (3311), the two support arms (3312) are configured to support a hanging ear of the powder container (4), and an inner wall surface of the connecting wall (3311) is provided with a guide rail (336) extending in a mounting direction of the powder container (4); and
the weighing module (3) further comprises a sensing element (35) and a button (36) for triggering the sensing element (35), the button (36) is slidably connected in the guide rail (336), and at least a part of the button (36) protrudes from the inner wall surface.

10. The beverage machine (10, 10a, 10b) according to any one of claims 1 to 4, wherein the support member is a support bracket (33, 33') for supporting a powder container (4), the support bracket (33, 33') comprises a mounting groove (331, 331') for accommodating the powder container (4), the mounting groove (331, 331') comprises a connecting wall (3311, 3311') and two support arms (3312, 3312') extending in a same direction from two laterally opposite ends of the connecting wall (3311, 3311'), and the two support arms (3312, 3312') are configured to support a hanging ear of the powder container (4); and
the weighing sensor (32, 32') is arranged to extend in a lateral direction, and an extending direction of the weighing sensor (32, 32') is consistent with an arrangement direction of the two support arms (3312, 3312').

11. The beverage machine (10, 10a, 10b) according to any one of claims 1 to 4, wherein a top portion of the support member is provided with a second guiding inclined surface (337) sloping downward in a direction away from the first sidewall (11).

12. The beverage machine (10, 10a, 10b) according to any one of claims 1 to 4, wherein the mounting portion (12) is provided with a first contact (122) electrically connected to the control unit, and the case (31) is provided with a second contact (317) configured to conductively connect to the first contact (122).

13. The beverage machine (10, 10a, 10b) according to any one of claims 1 to 4, wherein the casing (31') comprises an outer shell (3321) for fixing to the mounting portion (12), a rear cover (3322) located between the outer shell (3321) and the first sidewall (11) and connected to the outer shell (3321), and a top cover (3323) located above the outer shell (3321) and connected to the outer shell (3321); and the outer shell (3321) comprises a main shell body (3325) and a protrusion (3324) extending from a side, close to the rear cover (3322), of the main shell body (3325) toward the rear cover (3322), and the mounting space comprises a space enclosed jointly by the protrusion (3324) and the rear cover (3322).

14. The beverage machine (10, 10a, 10b) according to claim 13, wherein a mounting opening (3132') is provided on a side, away from the rear cover (3322), of the protrusion (3324), and the weighing module (3') further comprises a connecting bracket (37') disposed on the weighing sensor (32');
the support member is a support bracket (33') for supporting the powder container (4), the support bracket (33') comprises a mounting groove (331') for accommodating the powder container (4), the mounting groove (331') comprises a connecting wall (3311') and two support arms (3312') extending in a same direction from two laterally opposite ends of the connecting wall (3311'), and the two support arms (3312') are configured to support a hanging ear of the powder container (4); the support bracket further comprises a support ring (333) passing through the mounting opening (3132') for connecting to the weighing sensor (32'), and the weighing sensor (32') and the support ring (333) are both located within the space enclosed jointly by the protrusion (3324) and the rear cover (3322); and
the weighing sensor (32') comprises a fixing end and a detection end that are oppositely disposed, the fixing end is connected to the casing (31') through the connecting bracket (37'), and the support ring (333) is connected to the detection end.

15. The beverage machine (10, 10a, 10b) according to any one of claims 1 to 14, wherein the first sidewall (11) is provided with a through hole; and the feeding assembly (2) comprises a grinding mechanism (22) disposed within an internal space of the housing (1) and a discharge pipe (21) connected to the grinding mechanism (22), a discharge end of the discharge pipe (21) extends out of the through hole, and the discharge pipe (21) is located above the weighing module (3, 3').
